# EUROPÄISCHE PATENTSCHRIFT

(11) **EP 4 108 647 B1**
(45) Veröffentlichungstag und Bekanntmachung des Hinweises auf die Patenterteilung: **20.11.2024**
(21) Anmeldenummer: 21180606.2
(22) Anmeldetag: 21.06.2021
(51) Int. Cl.: C05G 3/40, C05G 5/35, B01J 6/00, C01B 32/312, C01B 32/354

(54) **VERFAHREN ZUR HERSTELLUNG VON MIT FLÜSSIGEN DÜNGEMITTELN BELADBAREN KERN-HÜLLE-PARTIKELN**
METHOD FOR THE PREPARATION OF CORE PARTICLES WHICH CAN BE COATED WITH LIQUID FERTILISERS
PROCÉDÉ DE FABRICATION DE PARTICULES À NOYAU ET À ENVELOPPE CHARGÉES EN ENGRAIS LIQUIDE

(43) Veröffentlichungstag der Anmeldung: 28.12.2022
(73) Patentinhaber: eeplasma GmbH, 82024 Taufkirchen (DE)
(72) Erfinder: Gschwandtner, Alexander, 80687 München (DE)
(74) Vertreter: Manitz Finsterwald Patent- und Rechtsanwaltspartnerschaft mbB

(56) Entgegenhaltungen:
- WO-A2-2013/077748
- CN-A- 108 314 040
- CN-A- 108 996 501
- CN-A- 109 179 408
- GB-A- 1 462 088
- US-A1- 2019 375 641

## Beschreibung

Die Erfindung betrifft ein Verfahren zur Herstellung von mit flüssigen Düngemitteln beladbaren Kern-Hülle-Partikeln in einem durch eine elektromagnetische Welle, insbesondere Mikrowelle, angeregten Plasma.

Gegenwärtig verfügbare Mineraldünger liegen meist in Form von Salzen vor, die nach ihrer Ausbringung sehr schnell wirksam werden, d.h. keine Langzeitwirkung aufweisen, und Gefahr laufen, durch Niederschläge in das Grundwasser ausgewaschen zu werden. Um diese Probleme zu lösen, können Mineraldünger zwar mit Hüllen aus Kunstharz ummantelt werden, die sich im Boden nach und nach auflösen und dabei kontinuierlich Nährstoffe freisetzen. Allerdings sind derartige mineralische Langzeitdünger in der Herstellung teuer. Organischer Flüssigdünger in Form von Gülle, der in der Landwirtschaft, insbesondere der Viehzucht, anfällt, besitzt ebenfalls das Problem, dass er leicht ins Grundwasser eindringt und zu einer Nitratbelastung des Grundwassers führen kann. Feste organische Dünger müssen durch Mikroorganismen zunächst aufgebrochen und in ihre Bestandteile zerlegt werden und besitzen daher eine natürliche Langzeitwirkung, allerdings im Vergleich zu Mineraldünger einen geringeren Nährstoffgehalt.

CN109179408A offenbart ein Verfahren zur Herstellung von Aktivkohlepartikeln mit einer Partikelgröße von 200 mesh (74 µm) durch eine mikrowelleninduzierte Pyrolyse von Biomasse.

Der vorliegenden Anmeldung liegt die Aufgabe zugrunde, eine Möglichkeit anzugeben, einen umweltverträglichen Langzeitdünger zu schaffen, der kostengünstig herstellbar ist.

Die Aufgabe wird durch ein Verfahren mit den Merkmalen des Anspruchs 1 gelöst, und insbesondere durch ein Verfahren zur Herstellung von mit flüssigen Düngemitteln beladbaren Kern-Hülle-Partikeln in einem durch eine elektromagnetische Welle, insbesondere Mikrowelle, angeregten Plasma, bei dem organische Feststoffteilchen, insbesondere Partikel aus nachwachsenden Rohstoffen, und ein kohlenwasserstoffhaltiges Gas, insbesondere Biogas oder Erdgas, in eine insbesondere rohrförmige Prozesskammer eingeleitet werden, und in dem Plasma der Kohlenwasserstoff, insbesondere Methan, aus dem kohlenwasserstoffhalten Gas in Wasserstoff und Kohlenstoff zerlegt und die organischen Feststoffteilchen pyrolysiert werden, wobei bei der Pyrolyse poröse Aktivkohlekerne entstehen, die, insbesondere in einer Abklingzone des Plasmas, jeweils von einer Hülle aus Kohlenstoff, der aus der Zerlegung des Kohlenwasserstoffes resultiert, ummantelt werden, um die Kern-Hülle-Partikel zu bilden.

Durch den Einsatz eines durch eine elektromagnetische Welle angeregten Plasmas zur Zerlegung des gasförmigen Kohlenwasserstoffes in seine Bestandteile Wasserstoff und Kohlenstoff und den Zusatz von organischen Feststoffteilchen, insbesondere Partikeln aus nachwachsenden Rohstoffen wie beispielsweise Holz oder Mais, können kostengünstig Kern-Hülle-Partikel erzeugt werden, die anschließend mit einem flüssigen Düngemittel und damit mit Pflanzennährstoffen beladen werden können. Durch den Aufbau der Kern-Hülle-Partikel aus einem porösen Aktivkohlekern und einem Mantel aus Kohlenstoff wird ermöglicht, dass Feuchtigkeit und das Düngemittel nur langsam freigesetzt werden, d.h. dass die Pflanzennährstoffe nur langsam an die Pflanzen abgeben werden und dadurch sehr nachhaltig wirken können. Dies erfolgt ohne Belastung des Grundwassers.

Bei dem erfindungsgemäßen Verfahren werden die organischen Feststoffteilchen in dem Plasma durch Pyrolyse in flüchtige und feste Fragmente aufgespalten, die dann die Reaktionspartner für die Wasserstoff- und Kohlenstoffradikale aus der Zerlegung des Kohlenwasserstoffes bilden. Die flüchtigen Fragmente bilden zusammen mit angelagertem Wasserstoff flüchtige Substanzen, und die festen Fragmente bilden zusammen mit angelagertem Kohlenstoff feste Substanzen in Form der Kern-Hülle-Partikel. Mit anderen Worten können durch die Einwirkung des Plasmas auf die organischen Feststoffteilchen Kohlenstoffgerüstpartikel gebildet werden, die, insbesondere in der Abklingzone des Plasmas, mit einer Kohlenstoffhülle aus dem zerlegten Kohlenwasserstoff ummantelt werden. Insbesondere beträgt der Stoffmengenanteil des Kohlenstoffs in den Aktivkohlekernen 80% oder größer.

Als Kohlenwasserstoff kommt vorzugsweise Methan zur Anwendung, das als Erdgas oder Biogas zur Verfügung steht. Bei der Zerlegung von Erdgas in Kombination mit Partikeln aus nachwachsenden Rohstoffen wird die CO2-Abgabe in die Erdatmosphäre auf einen Betrag reduziert, der bei Verbrennung der natürlich nachwachsenden Rohstoffe mit Sauerstoff aus der Luft entstehen würde. Die CO2-Bilanz dieses Verfahrens ist für Erdgas daher Null, da der Kohlenstoff aus dem Erdgas in der Hülle der Kern-Hülle Partikel gebunden wird und die mit einem flüssigen Düngemittel beladenen Kern-Hülle Partikel nach Ausbringung kein CO2 in die Erdatmosphäre abgeben. Bei der Zerlegung von Biogas in Kombination mit Partikeln aus nachwachsenden Rohstoffen ist die CO2-Bilanz sogar negativ, da der in dem Methan des Biogases enthaltene Kohlenstoff dem atmosphärischen Kreislauf entzogen wird.

Insbesondere entstehen in dem Plasma aus Wasserstoff, der aus der Zerlegung des Kohlenwasserstoffes aus dem kohlenwasserstoffhaltigen Gas resultiert, Wasserstoffmoleküle. Die Wasserstoffmoleküle können, insbesondere zusammen mit den vorgenannten flüchtigen Substanzen, aus der Prozesskammer ausgeleitet werden und zum Antrieb von Verbrennungskraftmaschinen verwendet werden, oder als gereinigter Wasserstoff zur Erzeugung elektrischer Energie mittels Brennstoffzelle oder für andere chemische Prozesse zur Verfügung stehen. Durch das erfindungsgemäße Verfahren entstehen also nicht nur die mit einem flüssigen Düngemittel beladbaren Kern-Hülle-Partikel, sondern auch gasförmiger Wasserstoff, der einer weiteren Verwendung zugeführt werden kann. Die Zerlegung von Methan in einem Mikrowellenplasma wird bereits in dem Dokument EP 0 435 591 A2 beschrieben, wobei neben gasförmigem Wasserstoff auch Acetylen und Ethylen in größeren Mengen gebildet werden. Bei dem erfindungsgemäßen Verfahren werden jedoch nicht nur ein kohlenstoffhaltiges Gas, sondern zusätzlich und gleichzeitig auch die organischen Feststoffteilchen dem Plasma ausgesetzt. Aus den organischen Feststoffteilchen werden - wie vorstehend bereits beschrieben - durch Pyrolyse flüchtige und feste Fragmente erzeugt, an die sich die Wasserstoff- und Kohlenstoffradikale des zerlegten Kohlenwasserstoffes, die andernfalls die Gase Acetylen und Ethylen bilden, anlagern, so dass die unerwünschte Bildung von Acetylen und Ethylen zumindest weitgehend verhindert wird.

Vorzugsweise weisen die organische Feststoffteilchen eine Partikelgröße, insbesondere einen volumenäquivalenten Kugeldurchmesser, im Bereich von 0,1 mm, bevorzugt von 0,5 mm, bis 1 cm, bevorzugt bis 5 mm, auf. In diesem Größenbereich kann einerseits eine zumindest weitgehend vollständige Umwandlung der organischen Feststoffteilchen in poröse Aktivkohlekerne gewährleistet werden, und andererseits liegen die organische Feststoffteilchen damit in einer rieselfähigen und damit einfach handhabbaren Größe vor. Einen volumenäquivalenten Kugeldurchmesser erhält man durch Bestimmung des Durchmessers einer Kugel mit gleichem geometrischen Volumen wie das unregelmäßig geformte Partikel.

Bevorzugt werden die organischen Feststoffteilchen und das kohlenwasserstoffhaltige Gas in einem derartigen Massenverhältnis in die Prozesskammer eingeleitet, dass pro Zeiteinheit das Verhältnis des Gewichts der organischen Feststoffteilchen zu dem Gewicht des Kohlenstoffes in dem Kohlenwasserstoff aus dem kohlenwasserstoffhalten Gas im Bereich von 0,2 bis 2 liegt. Das Gewicht der organischen Feststoffteilchen, die in die Vorrichtung eingeleitet werden, liegt also bevorzugt in der Größenordnung des Gewichts des Kohlenstoffanteils des Kohlenwasserstoffes in dem kohlenwasserstoffhaltigen Gas.

Gemäß einer bevorzugten Ausführungsform der Erfindung wird das kohlenwasserstoffhaltige Gas durch wenigstens einen Einlass derart in die Prozesskammer eingeleitet, dass es im Inneren der Prozesskammer als Wirbelströmung rotiert, wobei die organischen Feststoffteilchen mit dem kohlenwasserstoffhaltigen Gas rotieren. Durch die Rotation werden in Folge der Fliehkraft die leichteren Gase, insbesondere gasförmiger Wasserstoff, von dem schwereren Kohlenstoff abgetrennt, und freie Kohlenstoffatome können im Umfangsbereich der Prozesskammer mit den festen Fragmenten der organischen Feststoffteilchen reagieren, die als Andockstellen dienen.

Um die Rotation des kohlenwasserstoffhaltigen Gases im Inneren der Prozesskammer zu erreichen, ist es bevorzugt, wenn das kohlenwasserstoffhaltige Gas tangential in die Prozesskammer eingeleitet wird. Hierbei handelt es sich um eine einfache und zuverlässige Maßnahme. Grundsätzlich kann das kohlenwasserstoffhalte Gas aber auch axial in die Prozesskammer eingeleitet werden, wobei die Rotation des kohlenwasserstoffhaltigen Gases durch Leitschaufeln erzeugt wird.

Die organischen Feststoffteilchen können dem tangential eingeleiteten kohlenwasserstoffhaltigen Gas beigemengt oder durch einen separaten Einlass im Zentrum der Wirbelströmung, insbesondere durch ein sich axial in die Prozesskammer hinein erstreckendes Rohr, in die Prozesskammer eingeleitet werden. Der bautechnische Aufwand ist bei einem separaten Einlass etwas höher, wobei jedoch ein gezielteres Einleiten der organischen Feststoffteilchen, insbesondere in Bezug auf das Plasma, möglich ist.

Die Rotation des kohlenwasserstoffhaltigen Gases kann durch ein im Inneren der Prozesskammer vorgesehenes, angetriebenes Schaufelrad verstärkt werden. Das Schaufelrad kann z.B. an einem Koaxialinnenleiter, wie er nachstehend noch beschrieben ist, angebracht und in schnelle Rotation versetzt werden, um die Trennung der festen, zumindest hauptsächlich kohlenstoffhaltigen Fragmente von den flüchtigen, zumindest hauptsächlich wasserstoffhaltigen Fragmenten zu verbessern, insbesondere damit weniger CO2 bei der Verbrennung der flüchtigen Substanzen zur Energieerzeugung z.B. in Gasmotoren entsteht. Darüber hinaus kann das Schaufelrad auch allein für die Rotation des kohlenwasserstoffhaltigen Gases verantwortlich sein.

Die Prozesskammer kann in einem Bereich zwischen einer Plasmazone, in der das Plasma in der Prozesskammer erzeugt wird, und einem Auslass der Prozesskammer für die aus den organischen Feststoffteilchen und dem kohlenwasserstoffhaltigen Gas erzeugten Produkte durch eine in diesem Bereich an der Außenseite der Prozesskammer angeordnete Heizung geheizt werden. Damit kann erreicht werden, dass etwaige Reste von Acetylen, die sich möglicherweise im Plasma bilden, nahe der Innenwand der Prozesskammer über ihre Zerfallstemperatur erwärmt werden und in Kohlenstoff und Wasserstoff zerfallen und der Kohlenstoff in die Ummantelung der festen Fragmente der organischen Feststoffteilchen eingebaut werden kann.

Das Plasma kann bei einem Druck im Bereich zwischen 0,1 bar und 10 bar, insbesondere Atmosphärendruck, betrieben werden. Bautechnisch werden bezüglich des Betriebsdruckes daher keine besonderen Anforderungen gestellt.

Sofern es sich bei der das Plasma anregenden elektromagnetischen Welle um eine Mikrowelle handelt, ist es bevorzugt, wenn die Mikrowelle über einen Mikrowellen-Hohlleiter der Prozesskammer zugeführt wird. Mit einem Hohlleiter kann elektrische Leistung verlustärmer als mit elektrischen Kabeln übertragen werden. Darüber hinaus sind Hohlleiter für einen Betrieb mit hohen Leistungen ausgelegt.

Die Mikrowelle kann über einen dem Mikrowellen-Hohlleiter nachgeschalteten Koaxialleiter mit einem insbesondere rohrartigen Koaxialinnenleiter und der Prozesskammer als Koaxialaußenleiter von axial in die Prozesskammer eingekoppelt werden. Hierdurch kann die zugeführte Energie gleichmäßig über den Umfang der Prozesskammer verteilt eingekoppelt werden, so dass sich im Plasma eine gleichmäßige Plasmadichte ausbilden kann. Dabei kann vorgesehen sein, dass die organischen Feststoffteilchen durch den rohrartigen Koaxialinnenleiter in die Prozesskammer eingeleitet werden.

Alternativ kann die Mikrowelle über ein an der Innenwand der Prozesskammer anliegendes dielektrisches Rohr in die Prozesskammer eingekoppelt werden. Auch hierdurch kann eine über den Umfang der Prozesskammer gleichmäßig verteilte Energieeinkoppelung in die Prozesskammer gewährleistet werden. Die Begrenzungen der elektromagnetischen Welle in dem dielektrischen Rohr werden dann einerseits durch die Innenwand der Prozesskammer aus Metall und andererseits durch eine Schicht aus hoher Elektronenkonzentration im Plasma, die sich nahe der inneren Oberfläche des dielektrischen Rohres ausgebildet.

Ein Verfahren zur Herstellung von mit flüssigen Düngemitteln beladenen Kern-Hülle-Partikeln, umfasst Schritt (A): Herstellen von mit flüssigen Düngemitteln beladbaren Kern-Hülle-Partikeln, wie es vorstehend beschrieben ist, und Schritt (B): Vermischen der Kern-Hülle-Partikel mit einem flüssigen Düngemittel, insbesondere Gülle, wobei das flüssige Düngemittel in die Aktivkohlekerne der Kern-Hülle-Partikel eindringt, insbesondere diffundiert. Die gemäß Schritt (A) hergestellten Kern-Hülle-Partikel können dann - wie vorstehend bereits beschrieben - mit z.B. in der Landwirtschaft gebräuchlichen flüssigen Düngemitteln wie Gülle vermischt werden. Nach Ausbringung der mit dem flüssigen Düngemittel beladenen Kern-Hülle-Partikel werden die dungaktiven Stoffe zusammen mit Feuchtigkeit langsam an die Pflanzen abgegeben, ohne signifikante Nitrat-Auswaschungen an das Grundwasser oder Ammoniakabgabe an die Luft. Zur Stickstoffdüngung mit Harnstoff sind die Kern-Hülle-Partikel besonders geeignet, da der gelöste Harnstoff in Wasser besonders gut in dem porösen Aktivkohlekern der Kern-Hülle-Partikel gespeichert werden kann, um dann langsam den benötigten Stickstoff mit Feuchtigkeit an die Pflanzen abzugeben.

Vorzugsweise umfasst das flüssige Düngemittel Wasser und zumindest einen Pflanzennährstoff, der ausgewählt ist aus der Gruppe bestehend aus Stickstoff, Kalium, Phosphor, Magnesium, Schwefel, Calcium sowie Mischungen davon. Hierbei handelt es sich um die für Pflanzen besonders wichtigen Makronährstoffe. Zusätzlich oder alternativ kann das flüssige Düngemittel aber auch einen oder mehrere Mikronährstoffe umfassen.

Kern-Hülle-Partikel sind erhältlich durch ein Verfahren, wie es vorstehend beschrieben ist, und können jeweils einen Aktivkohlekern aufweisen, der jeweils von einer Hülle aus Kohlenstoff ummantelt ist.

Insbesondere sind die Aktivkohlekerne der Kern-Hülle-Partikel hydrophil, und/oder sind die Hüllen der Kern-Hülle-Partikel hydrophob. Die Aktivkohlekerne der Kern-Hülle-Partikel besitzen eine sehr große spezifische Oberfläche und deshalb ein sehr hohes Adsorptionsvermögen. Die Hüllen der Kern-Hülle-Partikel aus einer hydrophoben Kohlenstoffschicht bewirken eine stark verzögerte Abgabe der gespeicherten Nährstoffe. Die Düngemittel und die Feuchtigkeit werden sehr langsam an die Pflanzen abgegeben und wirken dadurch sehr nachhaltig.

Die Kern-Hülle-Partikel können eine Partikelgröße, insbesondere einen volumenäquivalenten Kugeldurchmesser, im Bereich von 0,1 mm, bevorzugt von 0,5 mm, bis 1 cm, bevorzugt bis 5 mm, aufweisen. Die Aktivkohlekerne der Kern-Hülle-Partikel können eine Partikelgröße, insbesondere einen volumenäquivalenten Kugeldurchmesser, im Bereich von 0,1 mm, bevorzugt 0,5 mm, bis 1 cm, bevorzugt 5 mm, aufweisen, und die Hüllen der Kern-Hülle-Partikel können eine Schichtdicke im Bereich von 0,1 mm bis 3 mm aufweisen. Das Verhältnis der Schichtdicke der Hüllen der Kern-Hülle-Partikel zu der Partikelgröße, insbesondere dem volumenäquivalenten Kugeldurchmesser, der Aktivkohlekerne der Kern-Hülle-Partikel kann im Bereich von 0,1 bis 0,9 liegt. Die Aktivkohlekerne weisen bevorzugt eine spezifische Oberfläche gemessen nach DIN ISO 9277:2014-01 im Bereich von 300 m2/g bis 2000 m2/g auf.

Durch Verdichten der Kern-Hülle-Partikel, wie sie vorstehend beschrieben sind, können ferner Pellets hergestellt werden. Die Kern-Hülle-Partikel können also zu größeren Pellets gepresst werden, um die Abgabe des Düngemittels mit dem gespeicherten Wasser entsprechend der Größe der Pellets weiter zu verzögern. Dadurch kann den jeweiligen Anforderungen der Umweltbedingungen (Wiese, Acker, Wald, Trockenzone, gemäßigte Zone, feuchte Zone, wechselnde Zone etc.) Rechnung getragen werden.

Die Erfindung wird im Folgenden beispielhaft unter Bezugnahme auf die Zeichnung beschrieben. Es zeigen,
- Fig. 1: eine schematische Darstellung einer Plasma- und Prozessvorrichtung gemäß einer ersten Ausführungsform zur Durchführung des erfin-dungsgemäßen Verfahrens,
- Fig. 1a: eine schematische Darstellung einer Plasma- und Prozessvorrichtung gemäß einer abgewandelten Variante zur Durchführung des erfin-dungsgemäßen Verfahrens,
- Fig. 1b: eine schematische Darstellung einer Plasma- und Prozessvorrichtung gemäß einer weiteren abgewandelten Variante zur Durchführung des erfindungsgemäßen Verfahrens,
- Fig. 2: eine schematische Darstellung einer Plasma- und Prozessvorrichtung gemäß einer zweiten Ausführungsform zur Durchführung des erfindungsgemäßen Verfahrens, und
- Fig. 3: eine schematische Darstellung einer Plasma- und Prozessvorrichtung gemäß einer dritten Ausführungsform zur Durchführung des erfindungsgemäßen Verfahrens.

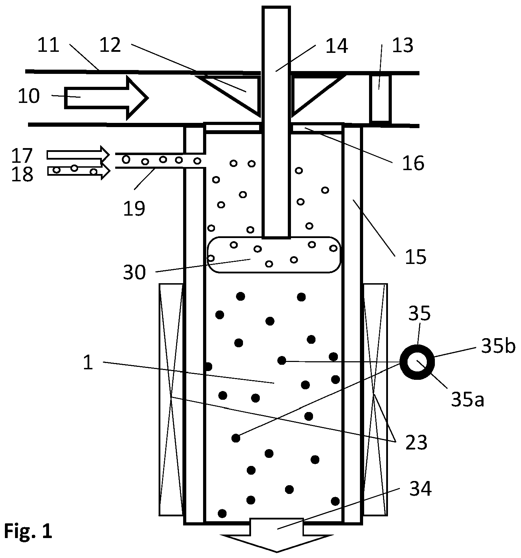

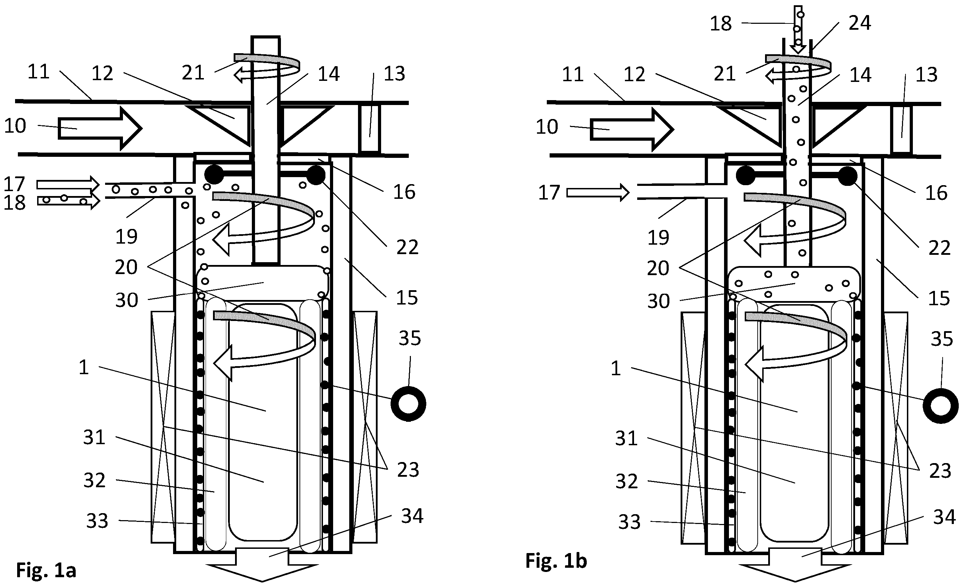

In Fig. 1 ist eine Vorrichtung zur Herstellung von mit flüssigen Düngemitteln beladbaren Kern-Hülle-Partikel durch Behandlung eines kohlenwasserstoffhaltigen Gases, insbesondere Biogas oder Erdgas, und organischen Feststoffteilchen, insbesondere Partikeln aus nachwachsenden Rohstoffen, beispielsweise Holzmehl oder Maismehl, in einem durch eine elektromagnetische Welle, insbesondere eine Mikrowelle, angeregten Plasma beschrieben, wobei das zugehörige Verfahren vorwiegend bei Atmosphärendruck angewendet wird. Die Vorrichtung umfasst eine Prozesskammer 1, einen Hohlleiter 11 zur Zuführung einer elektromagnetischen Welle 10, insbesondere einer Mikrowelle, insbesondere im H10-Mode, einen Kurzschlussschieber 13 als Reflexionsebene der elektromagnetischen Welle und einen Kegel 12 zur Einkopplung der elektromagnetischen Welle in einen Koaxialleiter, gebildet aus einem Koaxialinnenleiter 14 und der Prozesskammer 1 als Koaxialaußenleiter 15, damit sich in der Prozesskammer 1 eine Plasmaentladung bzw. Plasmazone 30 ausbilden kann. Die Trennung des Hohlleiters 11 von der Prozesskammer 1 erfolgt durch ein dielektrisches Fenster 16, das für die elektromagnetische Welle durchlässig ist, aber nicht für Prozessgase und Partikel.

Über einen oder mehrere Gaseinlässe 19 werden ein Prozessgas 17 in Form des kohlenwasserstoffhaltigen Gases und zusätzlich die Partikel aus nachwachsenden Rohstoffen 18 in die Prozesskammer 1 eingeleitet. Am Ende des Koaxialinnenleiters 14 wird durch eine nicht näher beschriebene Zündvorrichtung die Plasmaentladung 30 gezündet, die sich rotationssymmetrisch zwischen dem Koaxialinnenleiter 14 und den Koaxialaußenleiter 15 erstreckt.

In der Plasmazone 30 wird der gasförmige Kohlenwasserstoff 17 in Radikale aufgespalten und die Partikel aus nachwachsenden Rohstoffen 18 werden durch Pyrolyse in flüchtige und feste Fragmente zerlegt, wobei die flüchtigen Fragmente hauptsächlich mit Wasserstoffradikalen reagieren oder die Wasserstoffradikale selber Moleküle bilden und die festen Fragmente hauptsächlich mit Kohlenstoffradikalen reagieren, woraus Kern-Hülle-Partikel 35 aus einem hydrophilen porösen aktivkohleartigen Kern mit einem hydrophoben Mantel bzw. einer hydrophoben Hülle aus Kohlenstoff gebildet werden.

Durch die beschriebene Vorrichtung und das in Verbindung mit dieser Vorrichtung beschriebene Verfahren wird die Bildung von Acetylen und Ethylen weitgehend unterbunden, das andernfalls entstehen würde, wenn keine Partikel aus nachwachsenden Rohstoffen 18 in die Prozesskammer 1 eingeleitet werden.

Über einen Auslass 34 der Prozesskammer 1 werden die flüchtigen Substanzen (Wasserstoffmoleküle und flüchtige Fragmente aus den nachwachsenden Rohstoffen 18 mit angelagertem Wasserstoff) ausgeleitet und können zur Erzeugung mechanischer Energie, insbesondere mittels Verbrennungskraftmaschinen, oder elektrischer Energie, insbesondere mittels Brennstoffzellen, verwendet werden. Zusätzlich werden über den Auslass 34 die festen Kern-Hülle-Partikel 35, bestehend aus dem porösen aktivkohleartigen Kern mit einer Hülle aus Kohlenstoff ummantelt, entnommen.

Die Kern-Hülle-Partikel 35 können dann mit einem flüssigen Düngemittel, insbesondere Gülle, vermischt werden, wobei das flüssige Düngemittel in die porösen aktivkohleartigen Kerne der Kern-Hülle-Partikel 35 eindringt bzw. diffundiert. Bei dem flüssigen Düngemittel kann es sich um Wasser handeln, in dem zumindest ein Pflanzennährstoff, beispielsweise Stickstoff, Kalium, Phosphor, Magnesium, Schwefel oder Calcium enthalten ist.

Die mit dem flüssigen Düngemittel beladenen Kern-Hülle-Partikel 35 können anschließend ausgebracht werden. Durch den Aufbau der Kern-Hülle-Partikel 35 mit einem porösen Kern und einem Mantel aus reinem Kohlenstoff wird ermöglicht, dass Feuchtigkeit und Düngemittel im Boden nur langsam freigesetzt werden. Bei den mit dem flüssigen Düngemittel beladenen Kern-Hülle-Partikel 35 handelt es sich also um einen langsam wirksamen Dünger.

Eine Verbesserung der Kohlenstoffausbeute kann erreicht werden, wenn der Koaxialaußenleiter 15 zum Auslass 34 der Prozesskammer 1 hin mit einer zusätzlichen Heizung 23 ausgestattet wird, damit im Bereich der Heizung 23 eine Temperatur über der Selbstzerfallstemperatur von ca. 625°C von Acetylen erreicht wird, um unerwünschte Restmengen von Acetylen in Kohlenstoff und Wasserstoff aufzuspalten und den Kohlenstoff auf den Kern-Hülle-Partikeln 35 abzuscheiden.

In Fig. 1a ist eine abgewandelte Vorrichtung zur Herstellung der mit flüssigen Düngemitteln beladbaren Kern-Hülle-Partikeln 35 durch Behandlung des kohlenwasserstoffhaltigen Gases und den organischen Feststoffteilchen, insbesondere den Partikeln aus nachwachsenden Rohstoffen 18, in einem Plasma und eine Trennung der flüchtigen Substanzen von den festen Kern-Hülle-Partikel 35 in der Prozesskammer 1 beschrieben, wobei das Verfahren ebenfalls vorwiegend bei Atmosphärendruck angewendet wird. Die elektromagnetische Welle wird in gleicher Weise wie in Fig. 1 der Prozesskammer 1 zugeführt und es bildet sich am Ende des Koaxialinnenleiters 14 eine Plasmaentladung 30 aus.

Über einen oder mehrere tangential zum Umfang des Koaxialaußenleiters 15 bzw. der Prozesskammer 1 angeordnete Gaseinlässe 19 werden das Prozessgas 17 in Form des kohlenwasserstoffhaltigen Gases und die Partikel aus nachwachsenden Rohstoffen 18 in die Prozesskammer 1 eingeleitet und es entsteht eine Rotation bzw. Wirbelströmung 20 des kohlenwasserstoffhaltigen Gases und der Partikel aus nachwachsenden Rohstoffen 18 im Koaxialleiter und der Prozesskammer 1. Am Ende des Koaxialinnenleiters 14 wird durch eine nicht näher beschriebene Zündvorrichtung die Plasmaentladung 30 gezündet, die sich rotationssymmetrisch zwischen dem Koaxialinnenleiter 14 und den Koaxialaußenleiter 15 erstreckt.

In der Plasmazone 30 werden der gasförmige Kohlenwasserstoff 17 in Radikale aufgespalten und die Partikel aus nachwachsenden Rohstoffen 18 werden durch Pyrolyse in flüchtige und feste Fragmente zerlegt, wobei die flüchtigen Fragmente in einem zentralen, inneren Bereich 31 einer Rotationszone, bestehend hauptsächlich aus Wasserstoff, und einem mittleren Bereich 32 einer Rotationszone, bestehend hauptsächlich aus flüchtigen Fragmenten der nachwachsenden Rohstoffe angereichert mit Wasserstoff, mit Wasserstoffradikalen reagieren oder die Wasserstoffradikalen selber Moleküle bilden, und die festen Fragmente in einem äußeren Randbereich 33 der Rotationszone zum Koaxialaußenleiter 15 hin mit Kohlenstoffradikalen reagieren, woraus Kern-Hülle-Partikel 35 aus einem porösen aktivkohleartigen Kern mit einer Hülle aus Kohlenstoff gebildet werden, wobei die Rotationsgeschwindigkeit zur Innenwand der Prozesskammer 1 hin Null wird.

Auch durch diese Vorrichtung und das in Verbindung mit dieser Vorrichtung beschriebene Verfahren wird die Bildung von Acetylen und Ethylen weitgehend unterbunden, das andernfalls entstehen würde, wenn keine Partikel aus nachwachsenden Rohstoffen 18 in die Prozesskammer 1 eingeleitet werden.

Über den Auslass 34 der Prozesskammer 1 werden die flüchtigen Substanzen (Wasserstoffmoleküle und flüchtige Fragmente aus den nachwachsenden Rohstoffen 18 mit angelagertem Wasserstoff) dann wieder einer Erzeugung mechanischer oder elektrischer Energie zugeführt und die festen Kern-Hülle-Partikel 35, bestehend aus einem porösen aktivkohleartigen Kern mit einem Mantel aus Kohlenstoff, entnommen.

Zur Verbesserung der Trennung der flüchtigen von festen Substanzen in der Prozesskammer 1 kann zusätzlich am Koaxialinnenleiter 14 ein Schaufelrad 22 angebracht und in schnelle Rotation 21 versetzt werden, damit durch Steigerung der Fliehkraft die Trennung der leichten gasförmigen Substanzen von den schweren festen Partikel unterstützt wird und dadurch der Kohlenstoff mit seinem hohen Atomgewicht gegenüber Wasserstoff besser abgetrennt werden kann.

Eine zusätzliche Verbesserung der Kohlenstoffausbeute kann wie in Fig. 1 erreicht werden, wenn der Koaxialaußenleiter 15 zum Auslass 34 der Prozesskammer 1 hin mit einer zusätzlichen Heizung 23 ausgestattet wird.

Anhand von Fig. 1b ist eine weitere abgewandelte Vorrichtung beschrieben, wobei das Verfahren ebenfalls vorwiegend bei Atmosphärendruck angewendet wird. Die elektromagnetische Welle wird in gleicher Weise wie in Fig. 1 der Prozesskammer 1 zugeführt und es bildet sich am Ende des Koaxialinnenleiters 14 eine Plasmaentladung 30 aus.

Zum Unterschied zu Fig. 1 und Fig. 1a ist der Koaxialinnenleiter 14 rohrförmig ausgebildet und die Partikel aus nachwachsenden Rohstoffen 18 werden über das Innere des Koaxialinnenleiters 14, der einen entsprechenden Einlass 24 bildet, der Prozesskammer 1 zugeführt. Die Partikel müssen dadurch den gesamten Querschnitt der Plasmaentladung 30 durchqueren und werden deshalb wesentlich intensiver dem Plasma ausgesetzt. Durch diese Ausführungsform können wesentlich größere Partikel aus nachwachsenden Rohstoffen 18 verwendet werden, die im Plasma wiederum durch Pyrolyse in flüchtige und feste Fragmente zerlegt werden und insbesondere die Bildung von größeren Partikeln aus einem porösem aktivkohleartigem Kern mit einer Hülle aus Kohlenstoff ermöglichen.

Eine weitere Verbesserung der Kohlenstoffausbeute kann in der Vorrichtung gemäß Fig. 1b ähnlich wie in Fig. 1 durch Verwendung einer zusätzlichen Heizung 23 erzielt werden, die zum Auslass 34 der Prozesskammer 1 angebracht ist.

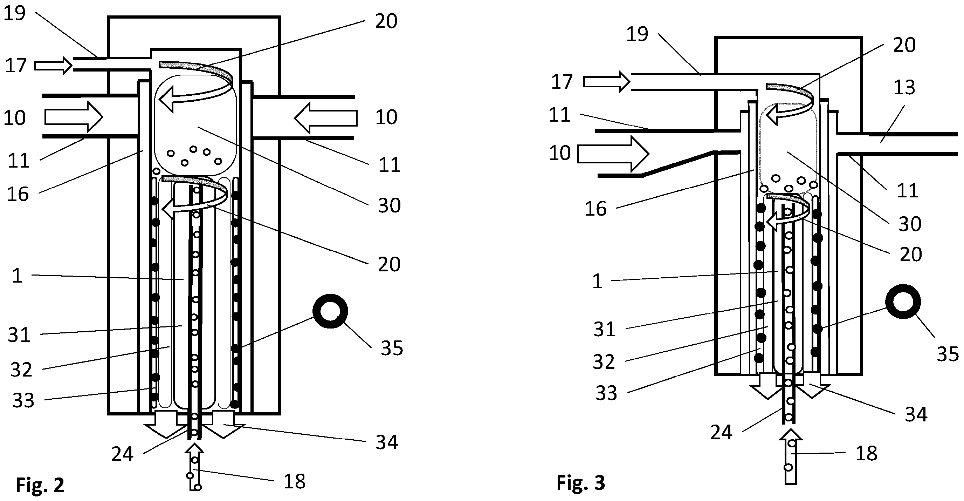

In Fig. 2 ist eine weitere Ausführungsform der Vorrichtung beschrieben, wobei das Verfahren ebenfalls vorwiegend bei Atmosphärendruck angewendet wird. Es handelt sich dabei um eine Vorrichtung entsprechend DE 10 2013 215 252 zur Zuführung der elektromagnetischen Welle und Erzeugung einer Plasmaentladung. Die elektromagnetische Welle wird in diesem Fall über ein an der Innenwand der Prozesskammer 1 anliegendes dielektrisches Rohr 16 in die Prozesskammer 1 eingekoppelt.

Ein Unterschied zu den Vorrichtungen in den Fig. 1, 1a und 1b besteht darin, dass die Partikel aus nachwachsenden Rohstoffen 18 durch ein axial zur Prozesskammer 1 verlaufendes Rohr, das einen Einlass 24 für die Partikel aus nachwachsenden Rohstoffen 18 bildet, der Plasmazone 30 zugeführt werden, wobei sich das Rohr 24 entlang der Mittenachse der Prozesskammer 1 von dem Prozesskammerauslass 34 bis zu der Plasmaentladung 30 erstreckt. Dadurch wird vermieden, dass im Bereich der Zuführung der elektromagnetischen Welle 10 am dielektrischen Rohr 16, insbesondere aus Quarz, sich Abscheidungen aus den Partikeln aus nachwachsenden Rohstoffen 18 bilden, die die elektromagnetische Welle absorbieren und dadurch das Quarzrohr 16 zerstören.

Eine zusätzliche Heizung 23 zur Verbesserung der Kohlenstoffausbeute ist auch in der Vorrichtung gemäß Fig. 2 möglich, wie in Fig. 1 dargestellt.

In Fig. 3 ist eine weitere Ausführungsform der Vorrichtung beschrieben, wobei das Verfahren ebenfalls vorwiegend bei Atmosphärendruck angewendet wird.

Es handelt sich dabei um eine dem Stand der Technik entsprechende Vorrichtung zur Erzeugung einer Plasmaentladung, ähnlich der Vorrichtung in der Publikation "Production of hydrogen via conversion of hydrocarbons using a microwave plasma", Mariusz Jasinski et al., Journal of Physics D: Applied Physics, IOP Publishing, 2011, 44 (19), pp.194002.

Ähnlich wie in Fig. 2 werden die Partikel aus nachwachsenden Rohstoffen 18 ebenfalls durch ein Rohr 24 der Plasmazone 30 zugeführt, das sich entlang der Mittenachse der Prozesskammer 1 vom Prozesskammerauslass 34 zur Plasmaentladung 30 erstreckt. Dadurch wird wiederum vermieden, dass im Bereich der Zuführung der elektromagnetischen Welle 10 am dielektrischen Rohr 16 aus Quarz sich Abscheidungen aus den Partikeln aus nachwachsenden Rohstoffen 18 bilden, die die elektromagnetische Welle absorbieren und dadurch das Quarzrohr zerstören.

Eine zusätzliche Heizung 23 zur Verbesserung der Kohlenstoffausbeute ist auch in der Vorrichtung gemäß Fig. 3 möglich, wie in Fig. 1 dargestellt.

Eine weitere Verbesserung der Vorrichtungen gemäß den Fig. 2 und 3 zur Trennung der flüchtigen von festen Substanzen in der Prozesskammer 1 kann erreicht werden, indem zusätzlich am Rohr 24 ein Schaufelrad 22 angebracht und in schnelle Rotation 21 versetzt wird, damit durch Steigerung der Fliehkraft die Trennung der leichten gasförmigen Substanzen von den schweren festen Partikel unterstützt wird und dadurch der Kohlenstoff mit seinem hohen Atomgewicht gegenüber Wasserstoff besser abgetrennt werden kann, wie in den Fig. 1a und 1b dargestellt.

Die Verbesserungen 21, 22 und 23 sind in den Fig. 2 und 3 nicht dargestellt.

Die Plasma- und Prozessvorrichtungen der Ausführungsformen gemäß den Fig. 1, 1a, 1b, 2 und 3 können gemäß dem Stand der Technik mit den Frequenzen von 2,45 GHz oder mit 915 MHz betrieben werden. Bei einer Frequenz von 2,45 GHz und einer gebräuchlichen Leistung von 10 KW können etwa 25 m3 Methan/Stunde zerlegt werden und bei einer Frequenz von 915MHz, bei der standardmäßig Magnetrons bis 100 KW mit einem Wirkungsgrad von nahezu 90% verfügbar sind, können 250 m3 Methan/Stunde zerlegt werden.

Die Menge der Partikel aus nachwachsenden Rohstoffen, die in die Vorrichtung eingeleitet werden, haben besonders bevorzugt das Gewicht des Kohlenstoffanteils der Kohlenwasserstoffe, das pro Kubikmeter Methan ca. 500 Gramm beträgt. Insbesondere kann der Gewichtsanteil der Partikel aus nachwachsenden Rohstoffen zwischen einem Anteil von 0,2 bis 2 des Kohlenstoffgewichts der Kohlenwasserstoffe variieren. Bei 10 KW Mikrowellenleistung werden bevorzugt 12,5 kg /Stunde nachwachende Rohstoffe in die Prozesskammer 1 eingeleitet und bei 100 KW etwa 125 kg/Stunde. Die benötigten Mengen der eingeleiteten nachwachsenden Rohstoffe hängen dabei hauptsächlich von der Größe der Partikel und der Beschaffenheit der nachwachsenden Rohstoffe ab.

Der Druckbereich des Verfahrens liegt zwischen 0,1 und 10 bar, bevorzugt bei Atmosphärendruck.

### Bezugszeichenliste

- 1: Prozesskammer
- 10: Mikrowelle
- 11: Hohlleiter
- 12: Kegel
- 13: Kurzschlussschieber
- 14: Koaxialinnenleiter
- 15: Koaxialaußenleiter
- 16: dielektrisches Fenster, dielektrisches Rohr
- 17: kohlenwasserstoffhaltiges Gas
- 18: Partikel aus nachwachsenden Rohstoffen
- 19: Gaseinlass
- 20: Wirbelströmung
- 21: Rotation
- 22: Rotationsschaufelrad
- 23: Heizung
- 24: Einlass
- 30: Plasmazone
- 31: innerer Bereich
- 32: mittlerer Bereich
- 33: äußerer Randbereich
- 34: Auslass
- 35: Kern-Hülle-Partikel
- 35a: Kern
- 35b: Hülle

## Patentansprüche

1. Verfahren zur Herstellung von mit flüssigen Düngemitteln beladbaren Kern-Hülle-Partikeln (35) in einem durch eine elektromagnetische Welle, insbesondere Mikrowelle, angeregten Plasma, bei dem
organische Feststoffteilchen (18), insbesondere Partikel aus nachwachsenden Rohstoffen, und ein kohlenwasserstoffhaltiges Gas (17), insbesondere Biogas oder Erdgas, in eine Prozesskammer (1) eingeleitet werden, und
in dem Plasma der Kohlenwasserstoff, insbesondere Methan, aus dem kohlenwasserstoffhalten Gas (17) in Wasserstoff und Kohlenstoff zerlegt und die organischen Feststoffteilchen (18) pyrolysiert werden, wobei bei der Pyrolyse poröse Aktivkohlekerne (35a) entstehen, die jeweils von einer Hülle (35b) aus Kohlenstoff, der aus der Zerlegung des Kohlenwasserstoffes resultiert, ummantelt werden, um die Kern-Hülle-Partikel (35) zu bilden.

2. Verfahren nach Anspruch 1,
**dadurch gekennzeichnet,**
**dass** in dem Plasma aus Wasserstoff, der aus der Zerlegung des Kohlenwasserstoffes aus dem kohlenwasserstoffhaltigen Gas (17) resultiert, Wasserstoffmoleküle entstehen.

3. Verfahren nach Anspruch 1 oder 2,
**dadurch gekennzeichnet,**
**dass** die organische Feststoffteilchen (18) eine Partikelgröße, insbesondere einen volumenäquivalenten Kugeldurchmesser, im Bereich von 0,1 mm, bevorzugt von 0,5 mm, bis 1 cm, bevorzugt bis 5 mm, aufweisen.

4. Verfahren nach einem der vorstehenden Ansprüche,
**dadurch gekennzeichnet,**
**dass** die organischen Feststoffteilchen (18) und das kohlenwasserstoffhaltige Gas (17) in einem derartigen Massenverhältnis in die Prozesskammer (1) eingeleitet werden, dass pro Zeiteinheit das Verhältnis des Gewichts der organischen Feststoffteilchen (18) zu dem Gewicht des Kohlenstoffes in dem Kohlenwasserstoff aus dem kohlenwasserstoffhalten Gas (17) im Bereich von 0,2 bis 2 liegt.

5. Verfahren nach einem der vorstehenden Ansprüche,
**dadurch gekennzeichnet,**
**dass** das kohlenwasserstoffhaltige Gas (17) durch wenigstens einen Einlass (19) derart in die Prozesskammer (1) eingeleitet wird, dass es im Inneren der Prozesskammer (1) als Wirbelströmung rotiert, wobei die organischen Feststoffteilchen (18) mit dem kohlenwasserstoffhaltigen Gas (17) rotieren.

6. Verfahren nach Anspruch 5,
**dadurch gekennzeichnet,**
**dass** das kohlenwasserstoffhaltige Gas (17) tangential in die Prozesskammer (1) eingeleitet wird, um die Rotation des kohlenwasserstoffhaltigen Gases (17) im Inneren der Prozesskammer (1) zu erreichen.

7. Verfahren nach Anspruch 6,
**dadurch gekennzeichnet,**
**dass** die organischen Feststoffteilchen (18) dem tangential eingeleiteten kohlenwasserstoffhaltigen Gas (17) beigemengt oder durch einen separaten Einlass (24) im Zentrum der Wirbelströmung, insbesondere durch ein sich axial in die Prozesskammer (1) hinein erstreckendes Rohr, in die Prozesskammer (1) eingeleitet werden.

8. Verfahren nach einem der Ansprüche 5 bis 7,
**dadurch gekennzeichnet,**
**dass** die Rotation des kohlenwasserstoffhaltigen Gases (17) durch ein im Inneren der Prozesskammer (1) vorgesehenes, angetriebenes Schaufelrad (22) verstärkt wird.

9. Verfahren nach einem der vorstehenden Ansprüche,
**dadurch gekennzeichnet,**
**dass** die Prozesskammer (1) in einem Bereich zwischen einer Plasmazone (30), in der das Plasma in der Prozesskammer (1) erzeugt wird, und einem Auslass (34) der Prozesskammer (1) für die aus den organischen Feststoffteilchen (18) und dem kohlenwasserstoffhaltigen Gas (17) erzeugten Produkte durch eine in diesem Bereich an der Außenseite der Prozesskammer (1) angeordnete Heizung (23) geheizt wird.

10. Verfahren nach einem der vorstehenden Ansprüche,
**dadurch gekennzeichnet,**
**dass** das Plasma bei einem Druck im Bereich zwischen 0,1 bar und 10 bar, insbesondere Atmosphärendruck, betrieben wird.

11. Verfahren nach einem der vorstehenden Ansprüche,
**dadurch gekennzeichnet,**
**dass** die Mikrowelle über einen Mikrowellen-Hohlleiter (11) der Prozesskammer (1) zugeführt wird.

12. Verfahren nach Anspruch 11,
**dadurch gekennzeichnet,**
**dass** die Mikrowelle über einen dem Mikrowellen-Hohlleiter (11) nachgeschalteten Koaxialleiter mit einem insbesondere rohrartigen Koaxialinnenleiter (14) und der Prozesskammer (1) als Koaxialaußenleiter (15) von axial in die Prozesskammer (1) eingekoppelt wird.

13. Verfahren nach Anspruch 12,
**dadurch gekennzeichnet,**
**dass** die organischen Feststoffteilchen (18) durch den rohrartigen Koaxialinnenleiter (14) in die Prozesskammer (1) eingeleitet werden.

14. Verfahren nach Anspruch 11,
**dadurch gekennzeichnet,**
**dass** die Mikrowelle über ein an der Innenwand der Prozesskammer (1) anliegendes dielektrisches Rohr (16) in die Prozesskammer (1) eingekoppelt wird.

15. Verfahren zur Herstellung von mit flüssigen Düngemitteln beladenen Kern-Hülle-Partikeln, umfassend
Schritt (A): Herstellen von mit flüssigen Düngemitteln beladbaren Kern-Hülle-Partikeln (35) nach einem der vorstehenden Ansprüche, und
Schritt (B): Vermischen der Kern-Hülle-Partikel (35) mit einem flüssigen Düngemittel, insbesondere Gülle, wobei das flüssige Düngemittel in die Aktivkohlekerne (35a) der Kern-Hülle-Partikel (35) eindringt, insbesondere diffundiert.

16. Verfahren nach Anspruch 15,
**dadurch gekennzeichnet,**
**dass** das flüssige Düngemittel Wasser und zumindest einen Pflanzennährstoff umfasst, der ausgewählt ist aus der Gruppe bestehend aus Stickstoff, Kalium, Phosphor, Magnesium, Schwefel, Calcium sowie Mischungen davon.

17. Verfahren nach einem der vorstehenden Ansprüche,
**dadurch gekennzeichnet,**
**dass** die Aktivkohlekerne (35a) der Kern-Hülle-Partikel (35) hydrophil sind, und/oder dass die Hüllen (35b) der Kern-Hülle-Partikel (35) hydrophob sind, und/oder
**dass** die Kern-Hülle-Partikel (35) eine Partikelgröße, insbesondere einen volumenäquivalenten Kugeldurchmesser, im Bereich von 0,1 mm, bevorzugt 0,5 mm, bis 1 cm, bevorzugt 5 mm, aufweisen, und/oder
**dass** die Aktivkohlekerne (35a) der Kern-Hülle-Partikel (35) eine Partikelgröße, insbesondere einen volumenäquivalenten Kugeldurchmesser, im Bereich von 0,1 mm, bevorzugt 0,5 mm, bis 1 cm, bevorzugt 5 mm, aufweisen, und/oder dass die Hüllen (35b) der Kern-Hülle-Partikel (35) eine Schichtdicke im Bereich von 0,1 mm bis 3 mm aufweisen, und/oder
**dass** das Verhältnis der Schichtdicke der Hüllen (35b) der Kern-Hülle-Partikel (35) zu der Partikelgröße, insbesondere dem volumenäquivalenten Kugeldurchmesser, der Aktivkohlekerne (35a) der Kern-Hülle-Partikel (35) im Bereich von 0,1 bis 0,9 liegt, und/oder
**dass** die Aktivkohlekerne (35a) eine spezifische Oberfläche gemessen nach DIN ISO 9277:2014-01 im Bereich von 300 m2/g bis 2000 m2/g aufweisen.

## Claims

1. A method for producing core-shell particles (35) which can be loaded with liquid fertilizers in a plasma excited by an electromagnetic wave, in particular a microwave, in which
organic solid particles (18), in particular particles of renewable raw materials, and a hydrocarbon-containing gas (17), in particular a biogas or natural gas, are introduced into a process chamber (1), and
in the plasma, the hydrocarbon, in particular methane, from the hydrocarbon-containing gas (17) is decomposed into hydrogen and carbon and the organic solid particles (18) are pyrolyzed, wherein, during the pyrolysis, porous activated carbon cores (35a) are produced which are each encased by a shell (35b) of carbon, said carbon resulting from the decomposition of the hydrocarbon, to form the core-shell particles (35).

2. A method according to claim 1,
**characterized in that**
hydrogen molecules are produced in the plasma of hydrogen which results from the decomposition of the hydrocarbon from the hydrocarbon-containing gas (17).

3. A method according to claim 1 or 2,
**characterized in that**
the organic solid particles (18) have a particle size, in particular a volume-equivalent spherical diameter, in the range from 0.1 mm, preferably from 0.5 mm, to 1 cm, preferably to 5 mm.

4. A method according to any one of the preceding claims,
**characterized in that**
the organic solid particles (18) and the hydrocarbon-containing gas (17) are introduced into the process chamber (1) in such a mass ratio that the ratio of the weight of the organic solid particles (18) to the weight of the carbon in the hydrocarbon from the hydrocarbon-containing gas (17) is in the range from 0.2 to 2 per unit of time.

5. A method according to any one of the preceding claims,
**characterized in that**
the hydrocarbon-containing gas (17) is introduced through at least one inlet (19) into the process chamber (1) such that it rotates in the interior of the process chamber (1) as a vortex flow, with the organic solid particles (18) rotating with the hydrocarbon-containing gas (17).

6. A method according to claim 5,
**characterized in that**
the hydrocarbon-containing gas (17) is tangentially introduced into the process chamber (1) to achieve the rotation of the hydrocarbon-containing gas (17) in the interior of the process chamber (1).

7. A method according to claim 6,
**characterized in that**
the organic solid particles (18) are admixed to the tangentially introduced hydrocarbon-containing gas (17) or are introduced into the process chamber (1) through a separate inlet (24) at the center of the vortex flow, in particular through a pipe extending axially into the process chamber (1).

8. A method according to any one of the claims 5 to 7,
**characterized in that**
the rotation of the hydrocarbon-containing gas (17) is amplified by a driven paddle wheel (22) provided in the interior of the process chamber (1).

9. A method according to any one of the preceding claims,
**characterized in that**
the process chamber (1) is heated in a region between a plasma zone (30), in which the plasma is generated in the process chamber (1), and an outlet (34) of the process chamber (1) for the products generated from the organic solid particles (18) and the hydrocarbon-containing gas (17) by a heating device (23) arranged in this region at the outer side of the process chamber (1).

10. A method according to any one of the preceding claims,
**characterized in that**
the plasma is operated at a pressure in the range between 0.1 bar and 10 bar, in particular at atmospheric pressure.

11. A method according to any one of the preceding claims,
**characterized in that**
the microwave is fed to the process chamber (1) via a microwave waveguide (11).

12. A method according to claim 11,
**characterized in that**
the microwave is coupled into the process chamber (1) from the axial direction via a coaxial conductor which is connected downstream of the microwave waveguide (11) and which has a coaxial inner conductor (14), in particular a tubular coaxial inner conductor, and the process chamber (1) as a coaxial outer conductor (15).

13. A method according to claim 12,
**characterized in that**
the organic solid particles (18) are introduced into the process chamber (1) through the tubular coaxial inner conductor (14).

14. A method according to claim 11,
**characterized in that**
the microwave is coupled into the process chamber (1) via a dielectric tube (16) contacting the inner wall of the process chamber (1).

15. A method for producing core-shell particles loaded with liquid fertilizers, comprising
step (A): Producing core-shell particles (35) which can be loaded with liquid fertilizers according to any one of the preceding claims, and
step (B): Mixing the core-shell particles (35) with a liquid fertilizer, in particular liquid manure, wherein the liquid fertilizer enters, in particular diffuses, into the activated carbon cores (35a) of the core-shell particles (35).

16. A method according to claim 15,
**characterized in that**
the liquid fertilizer comprises water and at least one plant nutrient selected from the group consisting of nitrogen, potassium, phosphorus, magnesium, sulfur, calcium and mixtures thereof.

17. A method according to any one of the preceding claims,
**characterized in that**
the activated carbon cores (35a) of the core-shell particles (35) are hydrophilic, and/or **in that** the shells (35b) of the core-shell particles (35) are hydrophobic, and/or
**in that** the core-shell particles (35) have a particle size, in particular a volume-equivalent spherical diameter, in the range from 0.1 mm, preferably 0.5 mm, to 1 cm, preferably 5 mm, and/or
**in that** the activated carbon cores (35a) of the core-shell particles (35) have a particle size, in particular a volume-equivalent spherical diameter, in the range from 0.1 mm, preferably 0.5 mm, to 1 cm, preferably 5 mm, and/or **in that** the shells (35b) of the core-shell particles (35) have a layer thickness in the range from 0.1 mm to 3 mm, and/or
**in that** the ratio of the layer thickness of the shells (35b) of the core-shell particles (35) to the particle size, in particular the volume-equivalent spherical diameter, of the activated carbon cores (35a) of the core-shell particles (35) is in the range from 0.1 to 0.9, and/or
**in that** the activated carbon cores (35a) have a specific surface area measured according to DIN ISO 9277:2014-01 in the range from 300 m2/g to 2000 m2/g.

## Revendications

1. Procédé de fabrication de particules à noyau et à enveloppe (35) char-geable d'engrais liquide dans un plasma activé par un rayonnement électromagnétique, notamment des micro-ondes, dans lequel
des particules solides organiques (18), en particulier des particules à base de matières premières renouvelables, et un gaz contenant des hydrocarbures (17), en particulier du biogaz ou du gaz naturel, sont introduits dans une chambre de traitement (1), et, dans le plasma, l'hydrocarbure, en particulier du méthane, est décomposé en hydrogène et en carbone à partir du gaz contenant des hydrocarbures (17) et les particules solides organiques (18) sont pyrolysées, dans lequel, lors de la pyrolyse, des noyaux de charbon actif poreux (35a) sont créés, qui sont respectivement enrobés par une enveloppe (35b) à base de carbone qui résulte de la décomposition de l'hydrocarbure afin de former les particules à noyau et à enveloppe (35).

2. Procédé selon la revendication 1, **caractérisé en ce**
**que** des molécules d'hydrogène se créent dans le plasma à base d'hydrogène qui résulte de la décomposition de l'hydrocarbure à partir du gaz contenant des hydrocarbures (17).

3. Procédé selon la revendication 1 ou la revendication 2, **caractérisé en ce que** les particules solides organiques (18) présentent une taille particulaire, en particulier un diamètre sphérique équivalent en volume, dans la plage de 0,1 mm, de préférence de 0,5 mm à 1 cm, de préférence jusqu'à 5 mm.

4. Procédé selon l'une des revendications précédentes, **caractérisé en ce que** les particules solides organiques (18) et le gaz contenant des hydrocarbures (17) sont introduits dans la chambre de traitement (1) dans un ratio massique tel que, par unité de temps, le rapport du poids des particules solides organiques (18) sur le poids du carbone dans l'hydrocarbure provenant du gaz contenant des hydrocarbures (17) se situe dans la plage de 0,2 à 2.

5. Procédé selon l'une des revendications précédentes, **caractérisé en ce que** le gaz contenant des hydrocarbures (17) est introduit dans la chambre de traitement (1) par au moins une entrée (19) de telle manière qu'il se mette en rotation sous forme d'un courant tourbillonnaire à l'intérieur de la chambre de traitement (1), les particules solides organiques (18) étant en rotation avec le gaz contenant des hydrocarbures (17).

6. Procédé selon la revendication 5, **caractérisé en ce**
**que** le gaz contenant des hydrocarbures (17) est introduit de manière tangentielle dans la chambre de traitement (1) afin de provoquer la rotation du gaz contenant des hydrocarbures (17) à l'intérieur de la chambre de traitement (1).

7. Procédé selon la revendication 6, **caractérisé en ce**
**que** les particules solides organiques (18) sont mélangées au gaz contenant des hydrocarbures (17) introduit tangentiellement ou sont introduites dans la chambre de traitement (1) par une entrée séparée (24) au centre du courant tourbillonnaire, en particulier par un tube s'étendant axialement à l'intérieur de la chambre de traitement (1).

8. Procédé selon l'une des revendications 5 à 7, **caractérisé en ce que** la rotation du gaz contenant des hydrocarbures (17) est amplifiée par une roue à aubes (22) avec entrainement prévue à l'intérieur de la chambre de traitement (1).

9. Procédé selon l'une des revendications précédentes, **caractérisé en ce que** la chambre de traitement (1) est chauffée dans une région entre la zone de plasma (30), dans laquelle le plasma est créé dans la chambre de traitement (1), et une sortie (34) de la chambre de traitement (1) pour les produits générés à partir des particules solides organiques (18) et le gaz contenant des hydrocarbures (17) par un chauffage (23) disposé dans cette zone sur un côté extérieur de la chambre de traitement (1).

10. Procédé selon l'une des revendications précédentes, **caractérisé en ce que** le plasma est fait fonctionner sous une pression dans la plage entre 0,1 bar et 10 bar, en particulier sous pression atmosphérique.

11. Procédé selon l'une des revendications précédentes, **caractérisé en ce que** les micro-ondes sont amenées par un conducteur creux de micro-ondes (11) de la chambre de traitement (1).

12. Procédé selon la revendication 11, **caractérisé en ce**
**que** les micro-ondes sont couplées axialement dans la chambre de traitement (1) par un conducteur coaxial branché en aval par rapport au conducteur creux de micro-ondes (11) avec un conducteur intérieur coaxial (14) en particulier en forme de tube et la chambre de traitement (1) sous forme d'un conducteur extérieur coaxial (15).

13. Procédé selon la revendication 12, **caractérisé en ce**
**que** les particules solides organiques (18) sont introduites dans la chambre de traitement (1) par le conducteur intérieur (14) coaxial en forme de tube.

14. Procédé selon la revendication 11, **caractérisé en ce**
**que** les micro-ondes sont couplées dans la chambre de traitement (1) par un tube diélectrique (16) adjacent à la paroi intérieure de la chambre de traitement (1).

15. Procédé de fabrication de particules à noyau et à enveloppe chargées d'engrais liquide, comprenant
l'étape (A) : de fabrication de particules à noyau et à enveloppe (35) char-geable d'engrais liquide selon l'une des revendications précédentes, et l'étape (B) : de mélange des particules à noyau et à enveloppe (35) avec un engrais liquide, en particulier du lisier, où l'engrais liquide pénètre, en particulier diffuse, dans les noyaux de charbon actif (35a) des particules à noyau et à enveloppe (35).

16. Procédé selon la revendication 15, **caractérisé en ce**
**que** l'engrais liquide comprend de l'eau et au moins un nutriment pour plantes qui est sélectionné dans le groupe constitué d'azote, de potassium, de phosphore, de magnésium, de soufre, de calcium ainsi que de mélanges de ceux-ci.

17. Procédé selon l'une des revendications précédentes, caractérisé en ce les noyaux de charbon actif (35a) des particules à noyau et à enveloppe (35) sont hydrophiles, et/ou que les enveloppes (35b) des particules à noyau et à enveloppe (35) sont hydrophobes, et/ou
que les particules à noyau et à enveloppe (35) présentent une taille particulaire, en particulier un diamètre sphérique équivalent en volume, dans la plage de 0,1 mm, de préférence de 0,5 mm, à 1 cm, de préférence 5 mm, et/ou que les noyaux de charbon actif (35a) des particules à noyau et à enveloppe (35) présentent une taille particulaire, en particulier un diamètre sphérique équivalent en volume, dans la plage de 0,1 mm, de préférence 0,5 mm, jusqu'à 1 cm, de préférence 5 mm, et/ou que les enveloppes (35b) des particules à noyau et à enveloppe (35) présentent une épaisseur de couche dans la plage de 0,1 mm à 3 mm, et/ou que le ratio de l'épaisseur de couche des enveloppes (35b) des particules à noyau et à enveloppe (35) sur la taille particulaire, en particulier le diamètre sphérique équivalent en volume, des noyaux de charbon actif (35a) des particules à noyau et à enveloppe (35) se situe dans la plage de 0,1 à 0,9, et/ou
que les noyaux de charbon actif (35a) présentent une surface spécifique mesurée selon la norme DIN ISO 9277 : 2014-01 dans la plage de 300 m²/g à 2000 m²/g.
